# FASCICULE DE BREVET EUROPEEN

(11) **EP 0 949 112 B1**
(45) Date de publication et mention de la délivrance du brevet: **17.03.2004**
(21) Numéro de dépôt: 99400817.5
(22) Date de dépôt: 02.04.1999
(51) Int. Cl.: B60N 2/00, B60N 2/08

(54) **Système modulable d'arrimage dans l'habitacle d'un véhicule automobile**
Modulares Befestigungssystem im Innenraum eines Kraftfahrzeuges
Modular anchoring system in an automotive vehicle passenger compartment

(30) Priorité: 06.04.1998 FR 9804243
(43) Date de publication de la demande: 13.10.1999
(73) Titulaire: Renault s.a.s., 92100 Boulogne Billancourt (FR)
(72) Inventeur: Amerigo, Marc, 31400 Toulouse (FR); Girardi, Philippe, 95410 Groslay (FR)

(56) Documents cités:
- DE-A- 19 633 032
- DE-U- 29 611 382
- DE-U- 29 803 620
- US-A- 3 486 204
- US-A- 5 236 153

## Description

L'invention propose un système pour le réglage de la position longitudinale, et le blocage en position réglée d'un sous ensemble sur le plancher horizontal de l'habitacle d'un véhicule automobile.

Selon une conception connue et conventionnelle, il a déjà été proposé d'aménager des séries de points d'ancrage de sous ensembles, sur le plancher du véhicule, chacun occupant une position déterminée de fixation.

Toutefois, cette conception offre un nombre limité de possibilités de fixation. Un utilisateur désirant, dans une telle configuration, positionner un sous-ensemble dans l'habitacle d'un véhicule équipé de points d'ancrage fixes, ne peut utiliser que les emplacements prévus à cet effet, ce qui est pénalisant en matière de modularité d'aménagement de l'habitacle.

Pour résoudre ce problème, et notamment dans le cas ou les sous-ensembles sont des sièges, on a imaginé de permettre des latitudes de réglage des points d'ancrage des sous ensembles.

Dans ce domaine, l'invention se rapporte donc plus particulièrement à un système pour le réglage de la position longitudinale, et le blocage en position réglée d'un sous-ensemble, sur une structure d'un habitacle d'un véhicule automobile équipé d'au moins une glissière qui reçoit en coulissement longitudinal au moins un dispositif de guidage des déplacements longitudinaux et de verrouillage longitudinal et vertical en position réglée d'un socle du sous-ensemble, dont l'extrémité reçue dans la glissière est équipée d'un mécanisme expansible mobile commandé entre
. une première position extrême, dite d'engagement ou de dégagement vertical, dans laquelle deux organes de verrouillage du mécanisme expansible, à action symétrique et opposée par rapport à un plan médian vertical de la glissière, sont dans une position escamotée vers l'intérieur dans laquelle leur encombrement transversal permet l'introduction ou l'extraction verticale du mécanisme à travers une fente longitudinale médiane de la glissière délimitée par deux bords supérieurs longitudinaux (définis ailes dans la suite) et parallèles de la glissière ; et
. une seconde position extrême, dite de verrouillage, dans laquelle les deux organes s'étendent chacun transversalement en regard de deux faces intérieures des ailes supérieures de la glissière avec lesquelles ils coopèrent par accrochage, pour immobiliser le socle par rapport à la glissière longitudinalement et verticalement ;
. en passant par au moins une position intermédiaire, dite de réglage, dans laquelle les deux organes s'étendent chacun transversalement en regard des deux faces intérieures des ailes supérieures de la glissière, pour retenir verticalement le socle par rapport à la glissière et permettre des déplacements longitudinaux du socle à l'intérieur de la glissière,
et du type dans lequel les deux organes de verrouillage du mécanisme sont montés articulés autour d'un axe longitudinal sur un premier coulisseau monté mobile verticalement par rapport au socle pour déplacer verticalement les organes, et sont commandés pour modifier leur encombrement transversal par le déplacement vertical d'un deuxième coulisseau qui est monté mobile verticalement par rapport au premier coulisseau et qui est solidaire d'une tige, de direction longitudinale, qui est reçue dans des lumières de commande des organes articulés pour, en se rapprochant ou en s'éloignant verticalement de l'axe longitudinal d'articulation des organes, provoquer leur pivotement dans les deux sens.

Le document US-A-5.236.153 offre un exemple d'une telle réalisation.

Toutefois, il est limité à une application concernant exclusivement des sièges d'aéroplane, et cette conception fait appel à des moyens expansibles délicats à utiliser. En effet, chaque extrémité de socle de sous-ensemble comporte deux pênes d'orientation sensiblement longitudinale, articulés autour d'un pivot d'axe longitudinal mobile verticalement, pour déplacer sélectivement des extrémités supérieures et inférieures des pênes de sorte qu'elles coopèrent sélectivement avec des zones respectivement supérieures et inférieures de la glissière associée, de façon à assurer des fonctions de guidage, verrouillage ou déverrouillage longitudinal par coincement, et de verrouillage vertical ou extraction par coincement ou relâchement. Dans ce dispositif, le pivot d'articulation des pênes est animé d'un mouvement de translation verticale qu'il transforme en un mouvement de rotation des pênes suivant l'axe de la glissière. Ce mouvement de translation verticale est obtenu par déplacement vertical du pivot, constitué d'une bille formant écrou, le long du filetage d'une vis lié à un bâti du dit dispositif, et dont le vissage ou le dévissage provoque sélectivement l'écartement ou le rapprochement des pênes, et, par voie de conséquence l'immobilisation du socle par rapport à la glissière.

Dans le contexte d'un véhicule automobile pour lequel la modularité des sous ensembles va de pair avec la rapidité de manipulation, un tel système vis-écrou est inapproprié.

De plus, si cette conception permet une grande modularité d'aménagement d'un habitacle d'aéroplane, elle ne peut en revanche être appliquée à un habitacle d'automobile pour lequel les impératifs d'immobilisation des sous-ensembles sont beaucoup plus draconiens.

En effet, en cas de brutale décélération ou de choc, les sous ensembles doivent rester rigoureusement immobiles par rapport à leurs glissières, pour éviter qu'ils ne soient projetés dans l'habitacle. L'éventualité d'un choc interdit donc l'emploi de procédés de verrouillage longitudinal par coincement.

Les sous-ensembles étant susceptibles de constituer des charges ayant des dimensions verticales importantes, leur système de fixation doit être conçu de façon à pouvoir résister à un arrachement non uniforme des points d'ancrage. Si, pour une raison quelconque, un sous ensemble comportant plus d'un point d'ancrage voit un de ses points d'ancrage arraché, il se produit l'apparition d'un couple sur les autres points d'ancrage et l'ensemble de la fixation de la charge est fragilisée. En cas de choc, le charge formant bras de levier, les accélérations longitudinales de la charge sont susceptibles d'exercer un effort de cisaillement sur les points d'ancrage des sous ensembles, qui risque de provoquer une rupture des points d'ancrage des sous-ensembles dans le cas où les moyens de verrouillage des points d'ancrages sont insuffisants.

Il est donc préférable de décaler verticalement les fonctions de guidage et de verrouillage d'une telle fixation de façon à pouvoir opposer un couple résistant à un éventuel couple au niveau du socle qui résulterait de l'effort de cisaillement exercé sur le socle et provoquerait la rupture de la fixation du sous-ensemble.

Enfin, ce système ne prévoit pas de système de fixation d'un sous ensemble quelconque au moyen d'anneaux et de sangles.

De manière connue, il a déjà été proposé de disposer des anneaux à la surface du plancher d'un véhicule utilitaire.

Un utilisateur désireux de disposer une charge dans un véhicule ainsi équipé à un endroit aux environs duquel il n'y a pas d'anneaux, est contraint d'utiliser des sangles de grande longueur afin de les accrocher à des anneaux éloignés, ce qui compromet la stabilité de la charge.

De plus, cette solution n'est pas acceptable dans le cas d'un véhicule non utilitaire, et notamment un véhicule polyvalent tel qu'un monospace, dans lequel l'habitacle est amené à recevoir des sièges, et ne peut donc comporter d'anneaux protubérants installés à demeure, pour répondre à des impératifs d'esthétique et de sécurité, les passagers pouvant être amenés à se blesser avec les anneaux.

Il importe donc de pouvoir bénéficier d'une conception d'anneaux de fixation amovibles, telle que celle décrite ci-dessus, qui permette de les déplacer et de les fixer en différents points de l'habitacle.

L'invention propose une nouvelle conception d'un système de réglage du type mentionné précédemment qui permet de remédier aux inconvénients précités.

Pour simplifier la commande du dit système et fournir une grande modularité de positions d'anneaux d'accrochage, l'invention propose un système du type précédemment décrit, caractérisé en ce que le sous-ensemble comporte un anneau d'arrimage, et en ce que le premier coulisseau est commandé dans ses déplacement verticaux par des actions manuelles verticales sur l'anneau d'arrimage qui est solidaire du premier coulisseau, et en ce que le second coulisseau est commandé dans ses déplacements verticaux par des actions manuelles verticales sur un anneau de préhension solidaire du second coulisseau.

Selon d'autres caractéristiques de l'invention :
- le deuxième coulisseau est rappelé élastiquement vers une position basse par rapport au premier coulisseau ;
- le premier coulisseau comporte deux portées cylindriques intermédiaires de guidage, verticales, parallèles et symétriques par rapport à un plan vertical médian du socle, transversal à la glissière, qui sont guidées en coulissement dans des trous oblongs du socle de diamètre complémentaire, et en ce que le deuxième coulisseau comporte deux pattes de guidage verticales parallèles et symétriques par rapport au plan médian du premier coulisseau, et qui sont guidées en coulissement dans des fentes du socle de forme complémentaire ;
- les organes de verrouillage comportent des lumières curvilignes non centrées autour de leur axe d'articulation, qui déterminent une course verticale de la tige, portée par le deuxième coulisseau et reçue dans les lumières, de sorte que la course de la tige est égale à la course du deuxième coulisseau ;
- les organes des verrouillages sont des peignes dont des parties actives sont reçues entre des dents transversales de crémaillère longitudinale portées par les faces intérieures des bords supérieurs de la glissière ;
- la crémaillère, à savoir les crémaillères présentent entre leurs dents des évidements de forme complémentaire de crochets portés par les parties actives des peignes pour resserrer transversalement vers l'intérieur les parois latérales de la glissière lorsque le socle est soumis à un effort d'arrachement.

D'autres caractéristiques et avantages de l'invention apparaîtront à la lecture de la description détaillée qui va suivre pour la compréhension de laquelle on se reportera aux dessins annexés dans lesquels :
- la figure 1 est une vue en perspective éclatée d'un système réalisé suivant l'invention ;
- la figure 2 est une vue selon la figure 1 d'un système suivant l'invention représenté en position verrouillée ;
- la figure 3 est une vue de face du socle dégagé de sa glissière ;
- la figure 4 est une vue en coupe suivant un plan médian vertical transversal P du système du système en position de verrouillage ;
- la figure 5 est une vue selon la figure 4 du système en position de réglage ;
- la figure 6 est une vue selon la figure 4 du système en position de dégagement ; et
- la figure 7 est une vue selon la figure 4 d'un mode de réalisation en variante de la crémaillère.

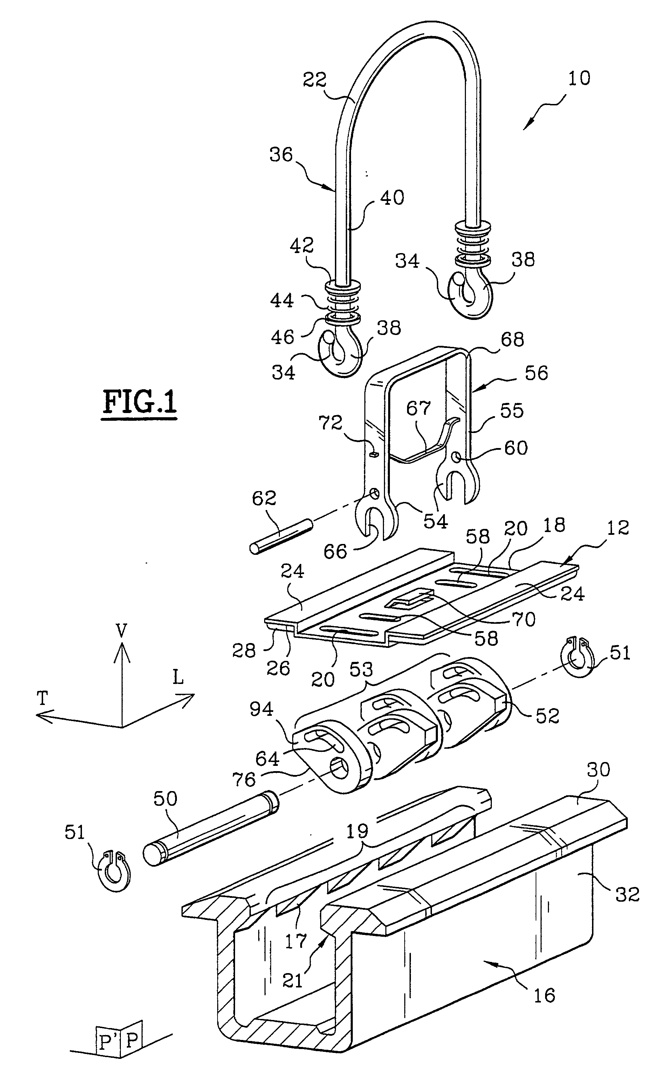

En référence à la figure 1, on désignera dans la description qui va suivre, et avec un sens identique, par le terme de direction verticale, la direction matérialisée par la flèche V, par le terme de direction longitudinale, la direction matérialisée par la flèche L, par le terme de direction transversale la direction matérialisée par la flèche T, par le terme de plan longitudinal, le plan matérialisé par le plan P, et par le terme de plan transversal, le plan matérialisé par le plan P'.

Sur la figure 1, on voit un système d'arrimage modulable 10 à commande par anneaux réalisé suivant l'invention.

De manière connue, le système 10 comporte un socle 12 réalisé sous forme d'une plaque horizontale qui s'étend parallèlement à un plancher (non représenté) du véhicule, et qui peut éventuellement être associée à un élément d'aménagement intérieur du véhicule tel qu'un siège, une tablette ou un quelconque élément d'aménagement intérieur (non représentés).

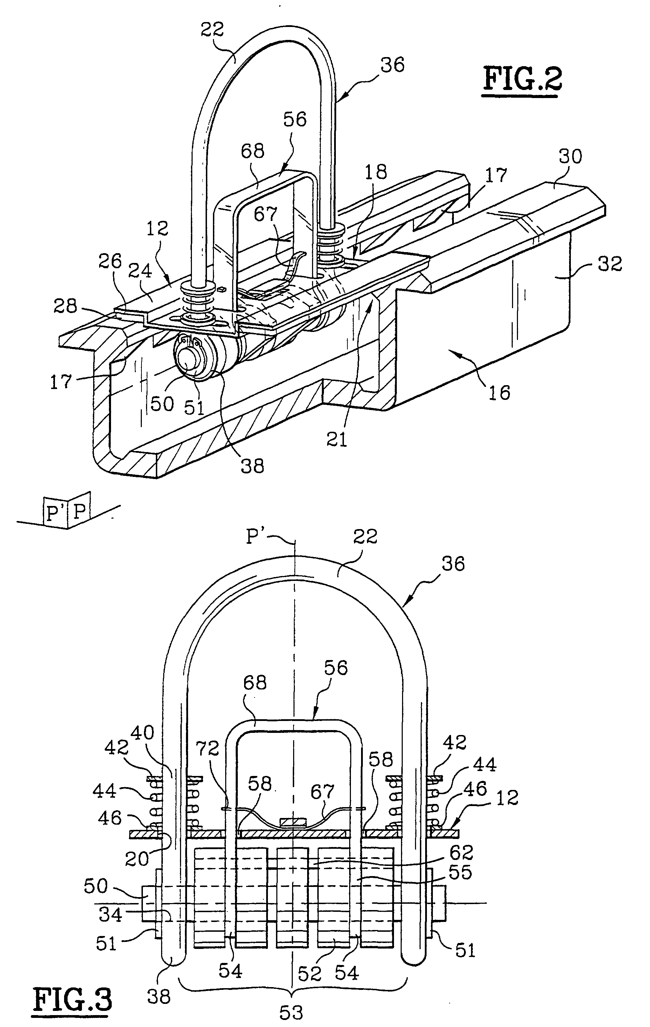

Le socle 12 est destiné à être reçu, comme on le voit aussi à la figure 2, dans une glissière 16 qui est fixée au plancher du véhicule. Avantageusement, la glissière 16 est réalisée à partir d'un profilé, par exemple une barre étirée ou emboutie.

Le socle 12 comporte deux ailes horizontales 24, symétriques par rapport au plan longitudinal médian P de la glissière 16, qui s'étendent transversalement sur toute la longueur du socle 12, et qui comportent sur leur faces inférieures 26 des patins 28, réalisés en matériau à faible coefficient de frottement, destinés, comme on le voit aussi à la figure 2, à permettre l'appui du socle 12 sur deux ailes supérieures 30 de la glissière 16, qui s'étendent horizontalement et transversalement vers l'extérieur, et en partie vers l'intérieur, à partir des bords d'extrémités supérieure de faces latérales 32 de la glissière 16.

Avantageusement, les patins en matériau à faible coefficient de frottement 28 sont portés par le socle 12, ce qui permet de réduire leur longueur à la dimension longitudinale du socle 12, permettant ainsi d'abaisser sensiblement les coûts de fabrication, par opposition à une conception où les patins 28 s'étendraient longitudinalement sur toute la longueur des ailes supérieures 30 de la glissière 16.

Comme on le voit sur la figure 1, une partie centrale longitudinale 18 du socle 12 est percé de trous oblongs 20, de direction verticale, et qui s'étendent transversalement de part et d'autre du plan médian P du dispositif 10, pour recevoir en coulissement vertical un premier coulisseau 36. Le coulisseau 36 comporte, dans une partie supérieure, un anneau d'arrimage 22, en forme de U inversé s'inscrivant dans le plan médian P, et qui est avantageusement réalisé à partir d'une barre cintrée suivant une forme appropriée. Dans une partie inférieure prolongeant les branches du U de l'anneau 22, le coulisseau comporte deux alésages 34 coaxiaux et longitudinaux. Dans un mode de réalisation préféré de l'invention, les alésages 34 sont portés par des formes en crochet 38 venues de matière avec la barre cintrée de l'anneau d'arrimage 22. Le coulisseau 36 peut alors avantageusement être réalisé d'une seule pièce, par exemple par déformation plastique d'un fil d'acier.

Le coulisseau 36 est guidé dans ses déplacements verticaux par contact des portées cylindriques intermédiaires 40, visibles à la figure 3, et faisant partie de l'anneau d'arrimage 22, avec les faces intérieures des trous oblongs 20 du socle 12.

Par ailleurs, les portées cylindriques intermédiaires 40 comportent à leurs extrémités supérieures, des collerettes annulaires 42, illustrées par les figures 1 et 3. Les collerettes annulaires 42 sont par exemple des rondelles fendues amovibles, montées dans des gorges annulaires (non représentées) situées aux extrémités supérieures des portées cylindriques intermédiaires 40.

Des ressorts hélicoïdaux de rappel 44, montés glissant sur les portées cylindriques intermédiaires 40, prennent appui d'une part sous les collerettes annulaires 42, et d'autre part, par l'intermédiaire de rondelles 46 enfilées sur les portées cylindriques intermédiaires 40, sur la partie centrale longitudinale 18 du socle 12.

Le coulisseau 36 peut donc se déplacer dans la direction verticale par rapport au socle 12, tout en étant limité dans ses déplacements verticaux vers le bas par la compression des ressorts 44. En effet, lorsque les ressorts 44 sont suffisamment comprimés, leurs spires sont jointives et le coulisseau 36 ne peut plus descendre. Par défaut, le coulisseau 36 est rappelé élastiquement vers le haut par les ressorts 44.

Dans ses alésages longitudinaux 34, le coulisseau 36 est susceptible de recevoir un axe longitudinal 50 sur lequel sont enfilés, comme on peut le voir à la figure 3, cinq organes de verrouillage 52 reçus longitudinalement entre les branches du U du coulisseau 36, et pouvant pivoter librement autour dudit axe 50, en occupant par exemple une position angulaire assemblée verrouillée, visible à la figure 2. L'alignement des organes de verrouillages en association avec les moyens de commande forme deux peignes 53, représentés aux figures 1 et 3, comportant respectivement deux et trois organes 52.

En variante (non représentée), les peignes 53 peuvent être réalisés chacun d'une seule pièce par moulage, forgeage, et/ou usinage.

La glissière 16 comporte dans une direction longitudinale des dents 17 qui s'étendent transversalement à l'intérieur sur des faces intérieures 21 de ses ailes supérieures 30, en formant sur la longueur de la glissière 16 une crémaillère 19. La crémaillère 19 est destinée à recevoir entre ses dents 17 des parties actives supérieures 94 des organes de verrouillage 52 des peignes 53.

Comme l'illustrent les figures 1 et 3, le socle 12 comporte deux fentes transversales 58, disposées entre les trous oblongs 20, et qui sont susceptibles de guider en coulissement vertical un deuxième coulisseau 56.

Comme on peut le voir à la figure 1, le deuxième coulisseau 56 est formé d'une plaque cintrée en forme de U, dont une partie supérieure forme un anneau de préhension 68, et dont une partie inférieure comporte deux pattes transversales verticales 55, qui sont percées longitudinalement de trous de passage 60 d'une tige longitudinale 62, destinée à traverser des lumières curvilignes 64 des organes 52 précités. Les pattes transversales 55 du deuxième coulisseau 56 présentent un encombrement transversal égal à la largeur des fentes 58 du socle 12

Avantageusement, le deuxième coulisseau 36 est réalisé en tôle découpée et pliée, ce qui permet de réduire considérablement les coûts de fabrication.

Les pattes transversales 55 sont percées de trous oblongs 66, qui débouchent verticalement aux extrémités inférieures 54 des pattes 55 du deuxième coulisseau 56, et dont le diamètre correspond à celui de l'axe longitudinal 50 qui reçoit les organes de verrouillage 52 des peignes 53, de sorte que le deuxième coulisseau 56 est guidé verticalement d'une part par les fentes 58, et d'autre part par l'axe 50 sur lequel les pattes 55 sont guidées en coulissement par l'intermédiaire des trous oblongs 66.

La liaison transversale du deuxième coulisseau 56 au premier coulisseau 36 par l'intermédiaire des trous oblongs 66, de l'axe longitudinal 50, et des alésages 34 garantit un bon centrage transversal du premier coulisseau 36 dans les trous oblongs transversaux 20.

Le second coulisseau 56 est rappelé élastiquement vers le bas par rapport au socle 12 par l'intermédiaire d'un ressort plat 67 prenant appui d'une part sous une patte transversale horizontale 70 du socle 12 qui est disposée longitudinalement entre les fentes 58, et d'autre part dans des fentes latérales 72 agencées longitudinalement dans les branches du U du deuxième coulisseau 56.

Le ressort de rappel 44 du premier coulisseau 36 ne peut rappeler le premier coulisseau 36 que vers le haut et ne forme pas de butée à ses déplacements verticaux vers le haut.

L'effort antagoniste du ressort de rappel 67 qui s'exerce sur le deuxième coulisseau 56 et par son intermédiaire sur l'axe longitudinal 50 permet de rappeler le premier coulisseau vers le bas, permettant ainsi à la rondelle 46 de rester au repos en appui sur le socle 12.

Par ailleurs, le ressort de rappel 67 est d'un tarage différent des ressorts 44 du premier coulisseau 36. En position de repos, le ressort de rappel 67 est précontraint de sorte qu'il tend a rappeler le deuxième coulisseau 56 vers le bas mais en est empêché par l'appui des pattes 54 sur l'axe longitudinal 50 du premier coulisseau 36, qui est rappelé vers le haut par les ressorts 44, de raideur supérieure à celle du ressort 67.

Avantageusement, la patte transversale 70 de retenue du ressort plat 67 est obtenue par poinçonnage de la plaque formant le socle 12, avec laquelle elle est venue de matière.

La figure 2 représente le système 10 en position assemblée de verrouillage.

Les organes de verrouillage 52 des peignes 53 sont portés par l'axe longitudinal 50 qui est immobilisé dans ses déplacements transversaux par les alésages coaxiaux longitudinaux 34 des crochets 38 du premier coulisseau 36, et est immobilisé longitudinalement par des moyens de fixation 51 tels que des anneaux élastiques ou, en variante (non représentée), un système vis/écrou.

Les organes de verrouillage 52 des peignes 53 sont par ailleurs traversés par la tige longitudinale 62 qui occupe une position déterminée dans les lumières 64 des organes 52, de sorte que les parties supérieures des organes de verrouillage 52 des peignes 53 s'étendent transversalement vers l'extérieur dans la glissière 16 entre les dents 17 de la crémaillère 19. Les organes de verrouillage 52 sont disposés alternativement sur l'axe longitudinal 50, de sorte que deux organes consécutifs 52 coopèrent avec deux espaces opposés compris entre deux dents 17 de la crémaillère 19.

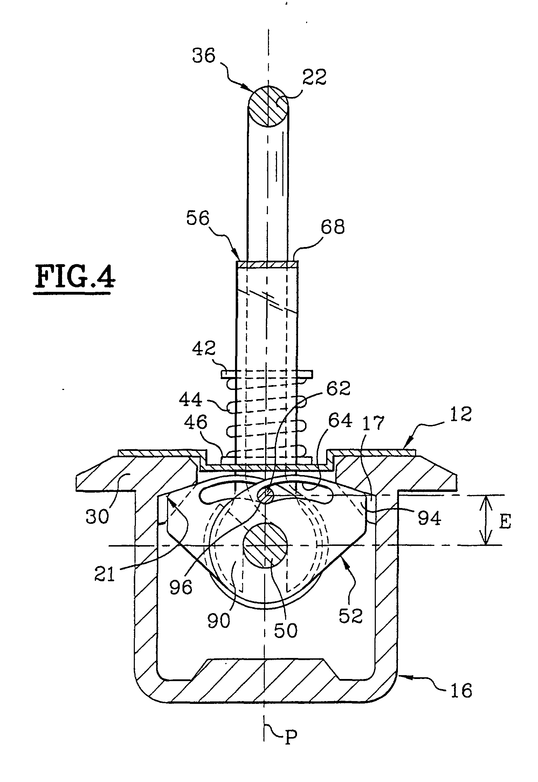

La position de la tige longitudinale 62 dans les lumières 64 est décrite en référence aux figures 4, 5, et 6.

La figure 4 représente le système 10 en position verrouillée.

Dans cette position, le coulisseau 36 est en butée vers le haut, les organes 52 en appui sous les faces intérieures 21 de la glissière 16 retenant le coulisseau 36 par l'intermédiaire de l'axe longitudinal 50.

Les organes de verrouillage 52 des peignes 53 ont dans le plan transversal P' un profil en forme de goutte d'eau et sont enfilés sur l'axe 50 au voisinage de leurs parties inférieures de plus fortes dimensions 90. Leurs parties supérieures actives 94 sont reçues entre les dents 17 de la crémaillère 19. Dans ce mode de réalisation, les dents 17 de la crémaillère 19, vues dans le plan transversal P', présentent un profil sensiblement triangulaire de façon à favoriser l'extraction rapide des organes de verrouillage 52 des peignes 53 lorsque ceux-ci seront, comme on le décrira ultérieurement, amenés à s'escamoter.

En variante (non représentée), les dents 17 de la crémaillère 19 peuvent présenter un profil en forme de parallélogramme permettant une meilleure résistance aux efforts longitudinaux du socle 12.

Dans la configuration de la figure 4, le coulisseau 36 est donc en position haute et le coulisseau 56 est rappelé dans sa position basse de butée sur l'axe 50 par le ressort plat 67 représenté sur la figure 1, de sorte que la tige longitudinale 62 est reçue en butée à l'extrémité 96 des lumières 64 des organes 52, laquelle extrémité 96 est opposée aux parties actives 94 desdits organes 52. Les lumières 64 sont sensiblement en arc de cercle et ne sont pas centrées sur l'axe 50.

De cette manière, l'écart E entre la tige longitudinale 62 et l'axe longitudinal 50 est minimal et l'appui de la tige longitudinale 62 en butée au fond de l'extrémité 96 des lumières 64 maintient les organes 52 dans une position d'encombrement transversal maximale.

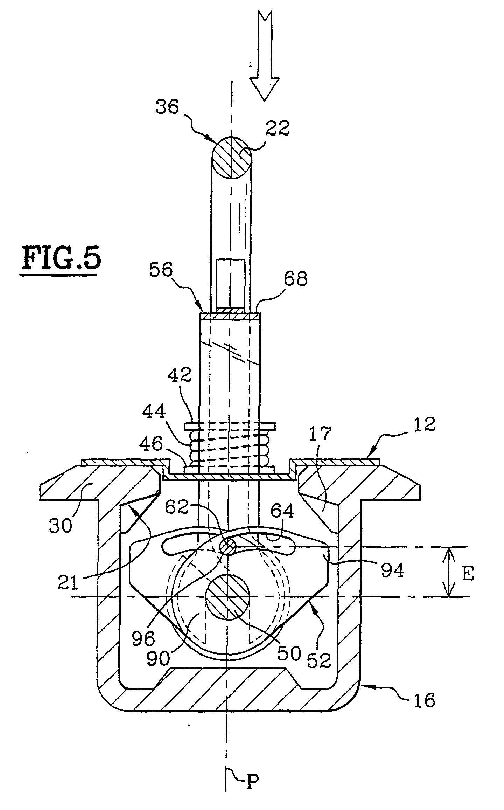

La figure 5 illustre la configuration du système 10 lorsqu'un utilisateur pousse l'anneau d'arrimage 22 vers le bas, comme illustré par la flèche blanche.

Le premier coulisseau 36 occupe alors une position de butée basse dans laquelle les parties actives 94 des organes de verrouillage 52 des peignes 53 ne sont plus reçues entre les dents 17, mais dégagées en dessous.

Le deuxième coulisseau descend avec le premier coulisseau 36, puisque le ressort 67 tend à le rappeler vers le bas et que l'axe 50, formant butée du deuxième coulisseau descend solidairement du premier coulisseau 36.

Ainsi, les organes de verrouillage 52 des peignes 53 présentent un encombrement transversal maximal, tout en étant dégagés des dents 17 de la crémaillère 19. Cette position correspond à une position de réglage longitudinal, par exemple, lorsqu'un utilisateur souhaite régler la position longitudinale de l'anneau d'arrimage 22, ou d'un éventuel sous-ensemble de l'aménagement intérieur du véhicule qui serait lié au socle 12. Le poids du socle 12 et du sous ensemble de l'aménagement intérieur du véhicule qui y est éventuellement lié plaque le socle 12 contre les ailes supérieures 30 de la glissière 16 par l'intermédiaire des patins 28 et des ailes 24, et, par suite, l'anneau d'arrimage 22 ne peut se déplacer que longitudinalement.

Par ailleurs, l'encombrement transversal maximal des organes de verrouillage 52 des peignes 53 garantit avantageusement que celui-ci ne quitte pas la glissière 16 dans le cas où un effort serait exercé verticalement vers le haut sur l'anneau d'arrimage 22, comme ce serait le cas si une charge, arrimée à l'anneau 22 basculait lors d'un choc violent.

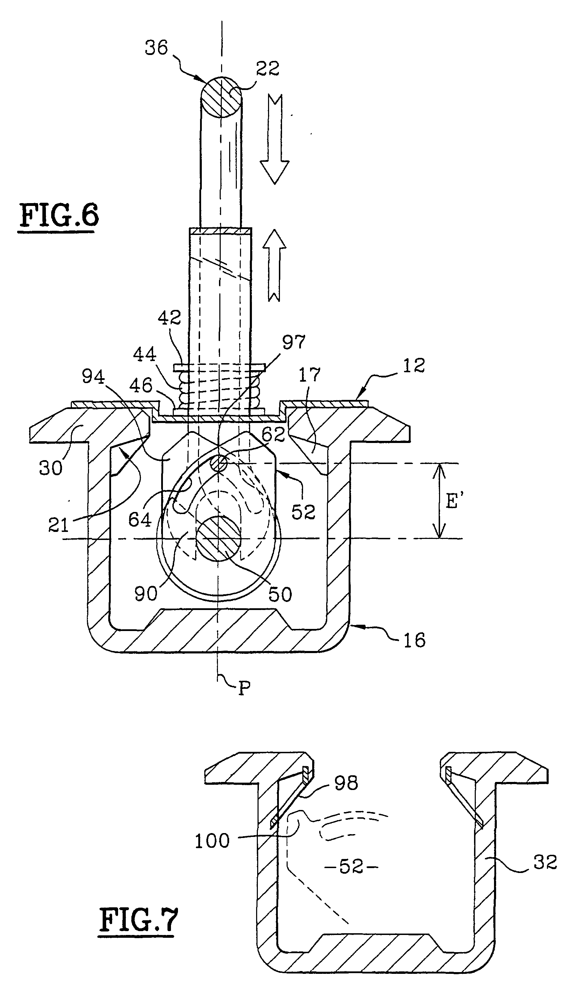

La figure 6 représente le système 10 en position d'engagement ou de dégagement vertical du socle 12.

Dans cette configuration, lorsqu'un utilisateur exerce un effort de traction, représenté par la flèche blanche, en tirant par exemple avec ses doigts sur l'anneau de préhension 68 du second coulisseau 56 et en maintenant l'anneau d'arrimage enfoncé, comme indiqué par la flèche blanche, par exemple avec la paume de sa main, le deuxième coulisseau 56 remonte par rapport au premier coulisseau 36 en contraignant à nouveau le ressort plat de rappel 67, ce qui conduit à un écartement E' entre la tige longitudinale 62 et l'axe longitudinal 50 des organes de verrouillage 52 des peignes 53 supérieur à l'écartement E décrit en référence aux figures 4 et 5.

Par suite, la tige longitudinale 62 a glissé à l'intérieur des lumières 64 pratiquées dans les organes de verrouillage 52 des peignes 53 pour atteindre une position de butée 97, qui est à l'opposé de la précédente position 96 dans les lumières 64. Le glissement en appui de la tige longitudinale 62 dans les lumières 64 des organes 52 lors de la remontée du coulisseau 56 provoque la rétraction transversale vers l'intérieur des organes 52, et le socle 12 n'est plus alors qu'en appui sur les ailes 30 de la glissière 16. Le socle 12 peut alors être extrait de la glissière 16. La remontée du deuxième coulisseau 56 est parfaitement assurée par les fentes 58 du socle 12 et par les trous oblongs 66 des extrémités inférieures 54 du deuxième coulisseau 56 qui reçoivent l'axe longitudinal 50 solidaire du premier coulisseau 36.

Avantageusement, cette position correspond à une utilisation en engagement ou en dégagement du système 10 dans la glissière 16 liée au véhicule. Cette position permet par exemple d'enlever ou de rajouter un sous-ensemble tel que précédemment décrit en référence à la figure 1, de façon à pouvoir utiliser l'habitacle du véhicule concerné avec une grande modularité.

La réintroduction du socle 12 et des éléments qui y sont liés dans la glissière 16 est facilitée par des tranches inférieures 76 des organes 52, qui, lorsque les organes 52 sont amenés au contact des ailes 30 de la glissière 16, provoquent la rétraction transversale des organes 52, les ressorts de rappel 44 et 67 provoquant aussitôt après, par sécurité, l'écartement des organes 52 en position d'encombrement transversal maximal.

La figure 7 illustre par ailleurs un mode de réalisation en variante de la glissière 16. La crémaillère 19 de la glissière 16 est réalisée par deux plaques 98, évidées à intervalles réguliers, et disposées selon la direction longitudinale de la glissière 16 et inclinées d'un angle similaire à celui des dents 17 décrites en référence aux figures précédentes, pour coopérer avec des extrémités en crochet 100 situées aux extrémités des parties actives 94 des organes 52. Dans cette configuration, les dents 17 de la crémaillère sont constituées par les zones de matière comprises entre deux évidements des plaques 98. De cette manière, lorsque les organes 52 sont dans une position d'encombrement transversal maximal, les extrémités en crochet 100 sont reçues dans les plaques évidées 98 de sorte qu'un effort d'arrachement vertical transmis au socle 12 transmet aux organes 52 une résultante qui tend à rapprocher les parois latérales 32 de la glissière 16, garantissant ainsi une parfaite tenue verticale du système 10 en cas de choc.

## Revendications

1. Système (10) pour le réglage de la position longitudinale, et le blocage en position réglée d'un sous-ensemble, sur une structure d'un habitacle d'un véhicule automobile équipé d'au moins une glissière (16) qui reçoit en coulissement longitudinal au moins un dispositif de guidage des déplacements longitudinaux et de verrouillage longitudinal et vertical en position réglée d'un socle (12) du sous-ensemble, dont l'extrémité reçue dans la glissière (16) est équipée d'un mécanisme expansible mobile commandé entre
. une première position extrême, dite d'engagement ou de dégagement vertical, dans laquelle deux organes (53) de verrouillage du mécanisme expansible, à action symétrique et opposée par rapport à un plan médian vertical (P) de la glissière (16), sont dans une position escamotée vers l'intérieur dans laquelle leur encombrement transversal permet l'introduction ou l'extraction verticale du mécanisme à travers une fente longitudinale médiane de la glissière délimitée par deux ailes (30) supérieures longitudinales et parallèles de la glissière (16); et
. une seconde position extrême, dite de verrouillage, dans laquelle les deux organes (53) s'étendent chacun transversalement en regard de deux faces intérieures (21) des ailes supérieures (30) de la glissière (16) avec lesquelles ils coopèrent par accrochage, pour immobiliser le socle (12) par rapport à la glissière (16) longitudinalement et verticalement ;
. en passant par au moins une position intermédiaire, dite de réglage, dans laquelle les deux organes (53) s'étendent chacun transversalement en regard des deux faces intérieures (21) des ailes supérieures (30) de la glissière (16), pour retenir verticalement le socle (12) par rapport à la glissière (16) et permettre des déplacements longitudinaux du socle (12) à l'intérieur de la glissière (16),
et du type dans lequel les deux organes (53) de verrouillage du mécanisme sont montés articulés autour d'un axe (50) longitudinal sur un premier coulisseau (36) monté mobile verticalement par rapport au socle (12) pour déplacer verticalement les organes (53), et sont commandés pour modifier leur encombrement transversal par le déplacement vertical d'un deuxième coulisseau (56) qui est monté mobile verticalement par rapport au premier coulisseau (36) et qui est solidaire d'une tige (62), de direction longitudinale, qui est reçue dans des lumières (64) de commande des organes (53) articulés pour, en se rapprochant ou en s'éloignant verticalement de l'axe (50) longitudinal d'articulation des organes (53), provoquer leur pivotement dans les deux sens,
**caractérisé en ce que** le sous-ensemble comporte un anneau d'arrimage (22), et **en ce que** le premier coulisseau (36) est commandé dans ses déplacement verticaux par des actions manuelles verticales sur l'anneau d'arrimage (22) qui est solidaire du premier coulisseau (36), et **en ce que** le second coulisseau (56) est commandé dans ses déplacements verticaux par des actions manuelles verticales sur un anneau de préhension (68) solidaire du second coulisseau (56).

2. Système selon la revendication 1, **caractérisé en ce que** le deuxième coulisseau (56) est rappelé élastiquement vers une position basse par rapport au premier coulisseau (36).

3. Système selon l'une quelconque des revendications précédentes, **caractérisé en ce que** le premier coulisseau (36) comporte deux portées cylindriques (44) intermédiaires de guidage, verticales parallèles et symétriques par rapport à un plan vertical médian (P') du socle (12), transversal à la glissière (16), qui sont guidées en coulissement dans des trous oblongs (20) du socle (12) de diamètre complémentaire, et **en ce que** le deuxième coulisseau comporte deux pattes de guidage (55) verticales parallèles et symétriques par rapport au plan médian (P') du premier coulisseau (36), et qui sont guidées en coulissement dans des fentes (58) du socle (12) de forme complémentaire.

4. Système selon l'une quelconque des revendications précédentes, **caractérisé en ce que** les organes (53) de verrouillage comportent des lumières (64) curvilignes non centrées autour de leur axe d'articulation (50), qui déterminent une, course verticale de la tige (62), portée par le deuxième coulisseau (56) et reçue dans les lumières (64), de sorte que la course de la tige (62) est égale à la course du deuxième coulisseau (56).

5. Système selon l'une quelconque des revendications précédentes, caractérisé en que les organes (53) de verrouillages sont des peignes dont des parties actives (94) sont reçues entre des dents (17) transversales de crémaillère longitudinale (19) portées par les faces intérieures (21) des ailes supérieures (30) de la glissière.

6. Système selon l'une quelconque des revendications 1 à 4, **caractérisé en ce que** les organes (53) de verrouillage sont des peignes et la glissière comporte une crémaillière (19) réalisée par des plaques (98) évidées à intervalles réguliers, et de forme complémentaire de crochets (100) portés par les parties actives (94) des peignes (53) pour resserrer transversalement vers l'intérieur les parois latérales (32) de la glissière (16) lorsque le socle (12) est soumis à un effort d'arrachement.

## Patentansprüche

1. System (10) für die Einstellung der longitudinalen Position und die Blockierung in eingestellter Position einer Untergesamtheit an einer Karosseriestruktur eines Kraftfahrzeugs, welches mit mindestens einer Gleitschiene (16) ausgestattet ist, welche in longitudinaler Gleitbewegung mindestens eine Vorrichtung einer Führung von longitudinalen Verstellungen und einer longitudinalen und vertikalen Verriegelung einer Grundplatte (12) der Untergesamtheit in eingestellter Position aufnimmt, deren Ende, das in der Gleitschiene (16) aufgenommen ist, mit einem expandierbaren beweglichen Mechanismus ausgestattet ist, der gesteuert wird zwischen
- einer ersten extremen Position, bezeichnet als vertikale Eingriffs- oder Freigabeposition, in welcher zwei Verriegelungsorgane (53) des expandierbaren Mechanismus mit symmetrischer und im Verhältnis zu einer vertikalen Mittelebene P der Gleitschiene (16) gegenüberliegender Betätigung in einer eingezogenen Position in Richtung nach innen sind, in welcher ihr transversaler Raumbedarf das vertikale Einführen oder Herausbringen des Mechanismus über einen longitudinalen mittleren Spalt der Gleitschiene ermöglicht, der durch zwei obere, longitudinale und mit der Gleitschiene (16) parallele Flügel (30) begrenzt wird; und
- einer zweiten extremen Position, bezeichnet als Verriegelungsposition, in welcher die zwei Organe (53) sich jedes transversal gegenüber von zwei inneren Flächen (21) der oberen. Flügel (30) der Gleitschiene (16) erstrecken, mit welchen sie durch Verhakung zusammenwirken, um die Grundplatte (12) bezüglich der Gleitschiene (16) longitudinal und vertikal festzusetzen;
- bei Hindurchgehen durch mindestens eine Zwischenposition, bezeichnet als Einstellposition, in welcher die zwei Organe (53) sich jedes transversal gegenüber der zwei inneren Flächen (21) der oberen Flügel 30 der Gleitschiene (16) erstrecken, um vertikal die Grundplatte (12) im Verhältnis zu der Gleitschiene (16) zu halten und longitudinale Verstellungen der Grundplatte (12) im Inneren der Gleitschiene (16) zu erlauben,
und von dem Typ, in welchem die zwei Verriegelungsorgane (53) des Mechanismus angelenkt um eine longitudinale Achse (50) an einem ersten Gleitstück (36) montiert sind, das vertikal beweglich bezüglich der Grundplatte (12) montiert ist, um die Organe (53) vertikal zu verstellen, und gesteuert sind zum Modifizieren ihres transversalen Raumbedarfs durch die vertikale Verstellung eines zweiten Gleitstücks (56), welches vertikal beweglich bezüglich dem ersten Gleitstück (36) montiert ist, und welches fest verbunden ist mit einer longitudinal ausgerichteten Stange (62), welche in Steuer-Langlöcher (64) der angelenkten Organe (53) aufgenommen wird, um unter ihrem vertikalen Annähern oder Entfernen von der longitudinalen Anlenkungsachse (50) der Organe (53) ihr Schwenken in den zwei Richtungen hervorzurufen,
**dadurch gekennzeichnet, dass** die Untergesamtheit einen Befestigungsring (22) aufweist, und dass das erste Gleitstück (36) in seinen vertikalen Verstellungen durch manuelle vertikale Betätigungen an dem Befestigungsring (22) betätigt wird, welcher mit dem ersten Gleitstück (36) fest verbunden ist, und dass das zweite Gleitstück (56) in seinen vertikalen Verstellungen durch manuelle vertikale Betätigungen an einem Greifring (68) betätigt wird, der mit dem zweiten Gleitstück (56) fest verbunden ist.

2. System nach Anspruch 1, **dadurch gekennzeichnet, dass** das zweite Gleitstück (56) elastisch in Richtung zu einer unteren Position im Verhältnis zum ersten Gleitstück (36) zurückgeholt ist.

3. System nach einem der vorhergehenden Ansprüche, **dadurch gekennzeichnet, dass** das erste Gleitstück (36) zwei zylindrische Zwischen-Führungssitze (44) aufweist, vertikal parallel und symmetrisch im Verhältnis zu einer vertikalen Mittelebene P' der Grundplatte (12), transversal zur Gleitschiene (16), welche gleitend in Langlöchern (20) der Grundplatte (12) mit komplementärem Durchmesser geführt sind, und das zweite Gleitstück zwei vertikale parallele und bezüglich der Mittelebene P' des ersten Gleitstücks (36) symmetrische Führungslappen (55) aufweist, und welche gleitend in Spalten (58) der Grundplatte (12) einer komplementären Form geführt sind.

4. System nach irgendeinem der vorhergehenden Ansprüche, **dadurch gekennzeichnet, dass** die Verriegelungsorgane (53) gekrümmte, nicht um ihre Anlenkungsachse (50) zentrierte Langlöcher (64) aufweisen, welche einen vertikalen Lauf der Stange (62) bestimmen, welche durch das zweite Gleitstück (56) getragen wird und in den Langlöchem (64) in einer Weise aufgenommen ist, dass der Lauf der Stange (62) gleich dem Lauf des zweiten Gleitstücks (56) ist.

5. System nach irgendeinem der vorhergehenden Ansprüche, **dadurch gekennzeichnet, dass** die Verriegelungsorgane (53) Kämme sind, von denen die aktiven Teile (94) zwischen transversalen Zähnen (17) von longitudinalen Zahnstangen (19) aufgenommen werden, welche durch die inneren Flächen (21) der oberen Flügel (30) der Gleitschiene getragen werden.

6. System nach irgendeinem der Ansprüche 1 bis 4, **dadurch gekennzeichnet, dass** die Verriegelungsorgane (53) Kämme sind und die Gleitschiene eine Zahnstange (19) aufweist, welche durch Platten (98) realisiert ist, welche bei regelmäßigen Intervallen ausgespart sind und von einer komplementären Form von Haken (100), welche durch die aktiven Teile (94) der Kämme (53) getragen sind, um transversal in Richtung nach innen die seitlichen Wände (32) der Gleitschiene (16) zu schließen, wenn die Grundplatte (12) einer Kraft eines Herausreißens ausgesetzt wird.

## Claims

1. System (10) for adjusting the longitudinal position of a sub-assembly and locking it in the adjusted position on an automotive vehicle structure equipped with at least one slide rail (16) that longitudinally slidably holds at least one device for guiding the longitudinal movements of and longitudinally and vertically locking in the adjusted position the base (12) of the sub-assembly, on which the end held by the slide rail (16) is fitted with an expandable mobile mechanism that can be adjusted between
. a first extreme position, known as the vertical engagement or disengagement position, in which two units (53) for locking the expandable mechanism, with symmetrical and opposite action relative to a vertical mid-plane (P) of the slide rail (16), are in an inwardly retracted position in which their transverse footprint allows for the vertical insertion or removal of the mechanism through a median longitudinal elongated hole in the slide rail delimited by two parallel upper longitudinal flanges (30) of the slide rail (16); and
. a second extreme position, known as the locked position, in which the two units (53) each extend transversely opposite two inner surfaces (21) of the upper flanges (30) of the slide rail (16), with which they cooperate by meshing, to longitudinally and vertically immobilize the base (12) relative to the slide rail (16);
. through at least one intermediate position, known as the adjustment position, in which the two units (53) each extend transversely opposite the two inner surfaces (21) of the upper flanges (30) of the slide rail (16), to vertically hold the base (12) relative to the slide rail (16) and allow for longitudinal movements of the base (12) inside the slide rail (16);
of the type in which the two mechanism locking units (53) are mounted hinged around a longitudinal rod (50) on a first slider (36) mounted vertically mobile relative to the base (12) to move the units (53) vertically, and are controlled to adjust their transverse footprint by the vertical movement of a second slider (56) that is mounted vertically mobile relative to the first slider (36) and is connected to a longitudinal pin (62) held in slots (64) to control the hinged units (53) by causing them to pivot in either direction by moving vertically closer to or away from the longitudinal hinge rod (50) of the units (53),
**characterized in that** the sub-assembly comprises a securing ring (22), the vertical movement of the first slider (36) is controlled by manual vertical action on the securing ring (22), which is connected to the first slider (36), and the vertical movement of the second slider (56) is controlled by manual vertical action on a pull ring (68) connected to the second slider (56).

2. System according to claim 1, **characterized in that** the second slider (56) is returned elastically to a lowered position relative to the first slider (36).

3. System according to either of the previous claims, **characterized in that** the first slider (36) comprises two cylindrical intermediate guide shafts (44), which are parallel and symmetrical relative to a vertical mid-plane (P') of the base (12), transverse to the slide rail (16), and are guided slidably in oblong holes (20) in the base (12) with a complementary diameter, and the second slider comprises two vertical guide arms (55) that are parallel and symmetrical relative to the mid-plane (P') of the first slider (36), and are slidably guided in elongated holes (58) in the base (12) with a complementary shape.

4. System according to any one of the previous claims, **characterized in that** the locking units (53) comprise curved slots (64) not centred around their hinge rod (50), which determine the vertical travel of the pin (62) carried by the second slider (56) and held in the slots (64) so that the travel of the pin (62) is equal to the travel of the second slider (56).

5. System according to any one of the previous claims, **characterized in that** the locking units (53) are combs the active parts (94) of which are held between transverse teeth (17) on a longitudinal rack (19) on the inner surfaces (21) of the upper flanges (30) of the slide rail.

6. System according to any one of claims 1 to 4, **characterized in that** the locking units (53) are combs and the slide rail comprises a rack (19) formed by plates (98) with recesses at regular intervals that are a complementary shape to hooks (100) on the active parts (94) of the combs (53) to transversely contract the side walls (32) of the slide rail (16) inwards when the base (12) is subject to an uplift force.
